# EUROPÄISCHE PATENTSCHRIFT

(11) **EP 3 734 782 B1**
(45) Veröffentlichungstag und Bekanntmachung des Hinweises auf die Patenterteilung: **21.07.2021**
(21) Anmeldenummer: 19172203.2
(22) Anmeldetag: 02.05.2019
(51) Int. Cl.: H02G 3/22, H01R 13/52, H02G 15/013, H02G 15/04

(54) **KABELDURCHFÜHRUNG**
BUSHING
PASSAGE DE CÂBLES

(43) Veröffentlichungstag der Anmeldung: 04.11.2020
(73) Patentinhaber: BEGA Gantenbrink-Leuchten KG, 58708 Menden (DE)
(72) Erfinder: Ostermann, Michael, 58706 Menden (DE)
(74) Vertreter: Grünecker Patent- und Rechtsanwälte PartG mbB

(56) Entgegenhaltungen:
- EP-A1- 2 819 249
- WO-A2-2012/017000
- KR-A- 20120 009 173
- US-B2- 8 262 094

## Beschreibung

Die vorliegende Erfindung betrifft eine Kabeldurchführung zum Durchführen eines Kabels durch eine Öffnung in einer Wand, insbesondere einer Gehäusewand.

Kabeldurchführungen dienen dazu, Kabel durch einen Durchbruch oder eine Öffnung in einer Gehäusewand in ein Gehäuse einzuführen. Im einfachsten Fall kann ein Kabel lediglich durch eine Durchgangsbohrung in das Gehäuse eingeführt werden. Häufig ist es jedoch notwendig, dass Kabel durch das Gehäuse eingeführt werden, wobei ein Gas- und/oder Flüssigkeitsaustausch zwischen den beiden Wandseiten des Gehäuses ausgeschlossen wird, um das Gehäuse beispielsweise staub-, spritzwasser- oder dampfschutzsicher zu machen. Zudem soll häufig eine unbeabsichtigte Bewegung des Kabels verhindert werden, bzw. das Kabel im Gehäuse gegen ein Herausziehen gesichert werden.

Im Stand der Technik gibt es verschiedene Lösungen zu den oben geschilderten Problemen, die sich im Wesentlichen mit dem Problem der Abdichtung eines Kabels beschäftigen.

Die EP 1 791 222 A1 beschreibt beispielsweise einen elastischen Stopfen und einen wasserfesten Verbinder. Der elastische Stopfen weist hierbei einen rohrförmigen Hauptabschnitt auf, in welchen ein Draht eingesetzt wird. An der Außenseite des Stopfens sind ein oder mehrere Lippen vorgesehen, welche an der Innenseite eines Gehäuses anliegen. Der Stopfen ist mit der äußeren Umfangsoberfläche des Drahts durch Quetschen oder Klemmen verbunden.

Die DE 20 2016 102 392 U1 beschreibt einen Umspritzadapter aus einem Steckverbindergehäuse und einer Umspritz-Adapterhülse. Hierbei wird zunächst ein Kabel an den Kontakten der Steckverbindung angeschlossen und die Umspritz-Adapterhülse auf dem Steckverbindergehäuse festgeschraubt, sodass das Kabel durch die Umspritz-Adapterhülse hindurch verläuft und anschließend eine Vergussmasse zwischen dem Mantel des Kabels und dem Innenmantel der Umspritz-Adapterhülse eingebracht. Anschließend wird der Steckverbinder im Bereich der Umspritz-Adapterhülse gemeinsam mit einem Kabelabschnitt des Kabels umspritzt, der sich unmittelbar an der kabeleingangsseitigen Durchführöffnung befindet.

Die EP 2 819 249 A1 offenbart eine Drahtdichtung für ein elektrisches Kabel und eine elektrische Crimpklemme, insbesondere für die Kraftfahrzeugindustrie Die Drahtdichtung besteht aus zwei aufeinanderfolgenden angeordneten Abschnitten, einem ersten Abschnitt, das auf einem relativ weichen Material gefertigt ist, sowie einem zweiten Abschnitt, welcher aus einem Vergleichsweise harten Material besteht. Der Bereich aus relativ weichen Material ist sowohl an seiner Außenseite wie auch an seiner Innenseite mit Dichtlippen ausgebildet, um sicherzustellen, dass Feuchtigkeit nicht zur Crimpklemme dringt.

Aus der KR 2012 0009173 A eine Kabelstruktur bekannt, umfassend eine an einem Ende des Kabels angeordnete Buchse, die zur Isolation eines Kabels bei der Einführung in ein Loch oder eine Halterung dient. Die Buchse weist hierbei einen Körperabschnitt und einen Halteabschnitt auf. Der Halterabschnitt ist an seiner äußeren Umfangsfläche mit Vorsprüngen und Nuten ausgebildet, um ein sicheres Fixieren innerhalb eines Loches oder einer Halterung zu gewährleisten.

Die WO 2012/017 000 A2 offenbart eine Beleuchtungsvorrichtung und ein Dichtelement hierfür, wobei das Dichtelement an der Ummantelung des Kabels an geformt ist und sich das Dichtelement konusförmig verjüngen erstrecken kann.

Ferner beschreibt die US 8,262,094 B2 ein Dichtungssystem umfassend wenigstens zwei Längssegmente zur Ausbildung einer Dichtung, welche mit einer Vielzahl von Außenrippen und einer Anzahl von Innenrippen ausgebildet sind.Die Lösungen des Standes der Technik sind jedoch zumeist aufwendig und erfordern eine Vielzahl von einzelnen Herstellungsschritten.

Aufgabe der vorliegenden Erfindung ist es, eine Kabeldurchführung bereitzustellen, die einfach und effizient ein Kabel in einer Öffnung in einer Gehäusewand abdichten kann. Gleichzeitig soll die Kabeldurchführung kostengünstig in der Herstellung sein.

Diese Aufgabe wird durch eine Kabeldurchführung zum Durchführen eines Kabels durch eine Öffnung in einer Wand, insbesondere einer Gehäusewand, gelöst, umfassend ein Kabel mit einem Kabelmantel, eine den Kabelmantel radial umgebende Dichtungsaufnahme und eine in der Dichtungsaufnahme angeordnete Dichtung, wobei wenigstens die Dichtungsaufnahme durch An- oder Umspritzen auf dem Kabelmantel ausgebildet ist die Dichtungsaufnahme an der Außenseite in axialer Richtung des Kabels konisch verjüngt ausgebildet ist und die Dichtungsaufnahme mit einer radialen Vertiefung zur Aufnahme der Dichtung ausgebildet ist.

Die vorliegende Erfindung stellt somit eine Kabeldurchführung zur Verfügung, die im Wesentlichen einstückig ausgebildet ist. Durch das Umspritzen des Kabels mit der Dichtungsaufnahme wird eine Einheit erzielt, die eine besonders wirkungsvolle Dichtung bereitstellt. Hierbei kann auf die bisher notwendige Vielzahl von einzelnen Elementen verzichtet werden, wodurch die Dichtung einerseits kostengünstiger hergestellt werden kann und sich gleichzeitig auch die Lagerkosten deutlich reduzieren.

Durch die konische Form der Dichtungsaufnahme wird die Positionierung der Dichtungsaufnahme in einem Durchbruch einer Gehäusewand vereinfacht, da dieser leichter eingeführt werden kann. Die konische Form hat vielmehr auch den Vorteil, dass die Durchführung schon bei der Herstellung des Gehäuses z.B. als Kunststoff- oder Druckgussteil ohne spätere Nacharbeit eingebracht werden kann. Durch Ausübung von Druck auf die Dichtungsaufnahme in Richtung des Durchbruchs in der Gehäusewand kann ein sicherer Halt der Dichtungsaufnahme bzw. der Dichtung innerhalb des Durchbruchs erzielt werden. Ferner lässt sich die konische Ausbildung einfach auf unterschiedlich große Durchmesser anpassen, abhängig davon, wie weit die Dichtungsaufnahme in den Durchbruch eingeschoben wird und ein axialer Sitz der Dichtung auch bei äußerer Belastung der Kabelleitung stehts gewährleistet wird.

die Ferner stellt Vertiefung im Bereich der Dichtungsaufnahme stellt einen festen Bereich bzw. Sitz für die Dichtung bereit, sodass diese definiert im Bereich der Dichtungsaufnahme angeordnet wird.

Gemäß einer besonders bevorzugten Ausführungsform können die Dichtungsaufnahme und die Dichtung durch An- oder Umspritzen auf dem Kabelmantel ausgebildet sein. Bei dieser Ausführungsform bilden das Kabel und die Dichtung eine vollständige Einheit, sodass die Anzahl der notwendigen Bauteile noch weiter reduziert werden kann.

Eine andere bevorzugte Ausführungsform kann vorsehen, dass die Dichtungsaufnahme und die Dichtung aus Kunstoffen unterschiedlicher Härte und/oder Elastizität bestehen. Diese Ausführungsform ermöglicht es, die Materialien der einzelnen Abschnitte der Dichtung konkret auf den Anwendungsfall abzustellen und entsprechend auszuwählen.

Hierbei hat es sich als besonders bevorzugt erwiesen, wenn die Dichtungsaufnahme härter als die Dichtung ist. Eine entsprechende Ausführungsform hat sich in der Praxis bewährt, da hierdurch ein sicherer Halt der Dichtung gewährleistet werden kann.

Hierbei hat es sich als besonders bevorzugt erwiesen, wenn die radiale Vertiefung im Querschnitt U-förmig ausgebildet ist. Durch die U-förmige Ausbildung der radialen Vertiefung werden beidseitig Schultern bereitgestellt, durch welche die Dichtung besonders gut innerhalb der Vertiefung gehalten werden kann.

Noch eine andere bevorzugte Ausführungsform kann vorsehen, dass die Dichtung an der Außenseite mindestens eine radial umlaufende Dichtlippe aufweist. Durch eine entsprechend angeordnete Dichtlippe wird eine besonders gute Abdichtung des Durchbruchs erzielt. Hierbei hat es sich in der Praxis bewährt, wenn die Dichtung an der Außenseite drei umlaufende Dichtlippen aufweist. Diese Anzahl an voneinander beabstandeten Dichtlippen hat zu ausgezeichneten Ergebnissen bezüglich der Dichtigkeit des Durchbruchs geführt, wobei ein entsprechendes Kabel in unterschiedlichste Durchbrüche mit unterschiedlichen Abmessungen eingeführt werden kann und jeweils gute Ergebnisse erzielt werden konnten.

Gemäß einer weiteren bevorzugten Ausführungsform kann sich die mindestens eine Dichtlippe ein vorbestimmtes Maß über die Außenseite der Dichtungsaufnahme hinaus erstrecken. Durch diese Ausführungsform wird die Abdichtung des Durchbruchs weiter verbessert. Hierbei können sich die über die Außenseite der Dichtungsaufnahme vorstehenden Abschnitte der Dichtlippe besonders gut an die Innenwand des Durchbruchs anlegen.

Hierbei hat es sich besonders bewährt, wenn sich die Dichtlippen nach außen verjüngen. Hierdurch erhöht sich die Flexibilität in den Außenbereichen der Dichtlippen, sodass ein besonders guter Kontakt mit der Innenwand des Durchbruchs erzielt werden kann.

Gemäß einer weiteren bevorzugten Ausführungsform kann die Dichtung als Lamellendichtung ausgebildet sein. Eine entsprechende Dichtung stellt eine besonders große Flexibilität zur Verfügung und durch die Vielzahl der hintereinander angeordneten einzelnen Lamellen eine besonders gute Dichtwirkung.

Gemäß einer anderen bevorzugten Ausführungsform kann die Dichtungsaufnahme an einem Ende des Kabelmantels angeordnet sein und eine Stirnfläche des Kabelmantels umgreifen. Eine entsprechende Ausführungsform kann insbesondere dann eingesetzt werden, wenn lediglich die einzelnen Kabel, nicht jedoch der Kabelmantel weiter in das Gehäuse eingeführt werden soll, sodass hierdurch die Dichtung gezielt am Ende des Kabelmantels angeordnet werden kann.

Noch eine andere bevorzugte Ausführungsform kann vorsehen, dass die Kabeldurchführung in der Öffnung selbsthemmend hält. Eine entsprechende Kabeldurchführung bietet einen besonders guten Schutz gegen versehentliches Ziehen am Kabel und verhindert ein unabsichtliches Entfernen der Dichtung aus dem Durchbruch.

Im Folgenden wird eine bevorzugte Ausführungsform der vorliegenden Erfindung anhand von Zeichnungen näher erläutert. Es zeigen:
Figur 1 eine Draufsicht auf einen mit Dichtungsaufnahme und Dichtung ausgebildeten Kabelmantel und
Figur 2 eine Detailansicht der Dichtungsaufnahme und Dichtung im Schnitt, eingesetzt in einen Durchbruch.

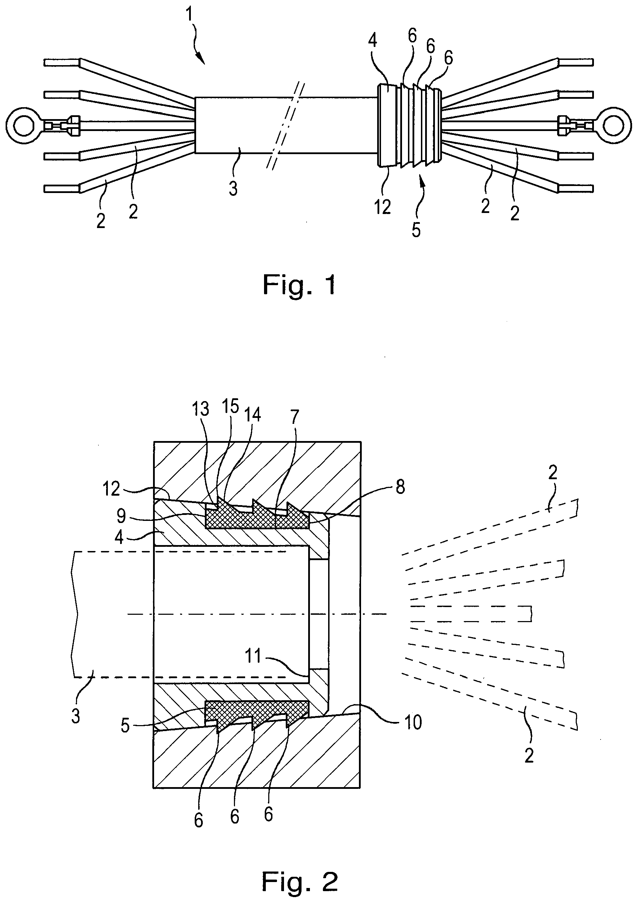

In Figur 1 ist in dreidimensionaler Darstellung ein Kabel 1 dargestellt, umfassend eine Mehrzahl von Adern 2, die von einem Kabelmantel 3 ummantelt sind. Ein entsprechendes Kabel kann in einer beliebigen Länge und Durchmesser bereitgestellt sein.

An einem Ende des Kabelmantels 3 ist der Kabelmantel an seiner Außenseite von einer radial umlaufenden Dichtungsaufnahme 4 umgeben. Der Kabelmantel 3 wird hierbei mit der Dichtungsaufnahme 4 umspritzt, sodass Kabelmantel 3 und Dichtungsaufnahme 4 eine Einheit bilden. Die Dichtungsaufnahme 4 ist im Detail in der Schnittansicht in Figur 2 dargestellt.

Wie in Figur 1 sowie in Figur 2 dargestellt, weist die Dichtungsaufnahme 4 eine konische Form auf und verjüngt sich zum Ende des Kabelmantels 3 hin. Hierbei kann die Dichtungsaufnahme 4 so ausgebildet sein, dass sie den Kabelmantel an seiner Stirnseite 11 umgreift. Die Stirnseite kann hierbei vollständig oder abschnittsweise von der Dichtungsaufnahme 4 verdeckt werden. In diesem Fall erstreckt sich die Dichtungsaufnahme 4 über das Ende des Kabelmantels 3 hinaus.

Die Dichtungsaufnahme 4 ist mit einer radial umlaufenden Vertiefung ausgebildet, welche im Querschnitt U-förmig ausgebildet ist, umfassend eine Basis 7, welche parallel zu dem Kabelmantel 3 ausgebildet ist, sowie zwei Schenkel 8, 9, welche senkrecht zu der Basis 7 angeordnet sind. Die Vertiefung ist hierbei zur Außenseite offen ausgebildet.

Durch die konische Form der Dichtungsaufnahme 4 weist die der Stirnseite 11 des Kabelmantels 3 zugewandte Schulter 8 eine geringere Höhe auf als die von der Stirnseite 11 abgewandte Schulter 9. Die Vertiefung kann hierbei so im Bereich der Dichtungsaufnahme 4 angeordnet sein, dass die der Stirnseite 11 zugewandte Schulter 8 im Wesentlichen auf einer Linie mit der Stirnseite 11 liegt.

Die Dichtungsaufnahme 4 besteht hierbei aus einem relativ harten Kunststoffmaterial z.B. PC, PPS oder PBT, welches nur geringe Elastizität aufweist.

In dieser Dichtungsaufnahme 4 ist eine Dichtung 5 angeordnet, welche ebenfalls als eine die Dichtungsaufnahme 4 radial umgebende Dichtung 5 ausgebildet ist. Die Dichtung 5 kann hierbei in die Dichtungsaufnahme 4 angespritzt, bzw. die Dichtungsaufnahme mit der Dichtung 5 umspritzt werden. Folglich bilden nicht nur die Dichtungsaufnahme 4 und der Kabelmantel 3, sondern zusätzlich auch die Dichtung 5 zusammen eine Einheit. Es wird folglich gleichzeitig eine Dichtung mit dem Kabel 1 bereitgestellt.

Wie auch die Dichtungsaufnahme 4 kann die Dichtung 5 konisch ausgebildet sein, d.h. im Bereich der Schulter 9 dicker ausgebildet sein als im Bereich der niedrigeren Schulter 8. Die Dichtung füllt hierbei die Vertiefung vollständig aus, d.h. liegt beidseitig an den Schultern 8, 9, sowie an der Basis 7 der Vertiefung an.

Wie in den Figuren dargestellt, kann die Dichtung 5 als Lamellendichtung mit einer Mehrzahl von Dichtlippen 6 ausgebildet sein. Die Dichtlippen sind hierbei an der Außenseite der Dichtung 5 angeordnet und erstrecken sich nach außen bis über die Außenseite 12 der Dichtungsaufnahme 4 hinaus.

Die einzelnen Dichtlippen 6 sind hierbei rastnasenartig ausgebildet, mit einer Grundfläche 13, welche sich parallel zu den Schultern 8, 9 nach außen erstreckt, und einer sich von dieser Grundfläche ein vorbestimmtes Maß in die radiale Vertiefung erstreckende schräg ausgebildeten Außenfläche 13. Die Grundflächen 13 der einzelnen Dichtlippen 6 sind hierbei unter einem vorbestimmten Abstand zueinander angeordnet und jeweils der Schulter 9 zugewandt, das heißt, die schräg bzw. geneigt ausgebildete Außenfläche 13 folgt ebenfalls der chronischen Ausbildung der Dichtungsaufnahme, ist jedoch unter einem stärkeren Winkel angeschrägt ausgebildet.

Durch diese rastnasenartige Ausbildung der Dichtlippen 6 sind die zwischen Grundfläche 13 und Außenfläche 14 angeordneten Spitzen 15 der Dichtlippen 6 besonders elastisch ausgebildet. Jede Spitze 15 erstreckt sich hierbei radial um die gesamte Dichtung 5 herum.

Im Gegensatz zu der Dichtungsaufnahme 4 besteht die Dichtung 5 aus einem besonders elastischen weichen Material wie z.B. TPE, EPDM oder Silikon.

Wird ein erfindungsgemäß ausgebildetes Kabel 1 mit Dichtungsaufnahme 4 und Dichtung 5 in eine Öffnung in einem Gehäuse, beispielsweise eine Aufnahmebohrung 10 eines Gehäuses eingesetzt, wird die Dichtungsaufnahme 4 mit dem einen kleineren Durchmesser aufweisenden Ende, das an dem stirnseitigen Ende 11 des Kabelmantels angeordnet ist, in die Aufnahmebohrung 10 eingeführt. Durch das weitere Einschieben der Dichtungsaufnahme 4 kommen dann die sich über die Außenseite 12 der Dichtaufnahme 4 erstreckenden Abschnitte der Dichtlippen 6, insbesondere die Spitzen 15 der Dichtlippen 6 mit der Innenseite der Aufnahmebohrung in Kontakt und legen sich an diese an.

Die Dichtungsaufnahme 4 wird so weit wie möglich in die Aufnahmebohrung eingeführt und bildet so in Kombination mit der Dichtung 5 eine dichte Kabeldurchführung in das Gehäuse.

Sofern an dem Kabel gezogen wird, wird durch die ausgeübte Kraft ein Zug auf die einzelnen Dichtlippen 6 ausgeübt, der zu einem Umklappen der Spitzen 15 der Dichtlippen 6 führen kann. Durch die sich allmählich verändernde Dicke der einzelnen Dichtlippen aber auch durch die sich gegen die Aufnahmeöffnung im vorderen und hinteren Bereich anliegende Dichtaufnahme wird das Umklappen jedoch verhindert und die Dichtung stehts axial innerhalb der Aufnahmeöffnung gehalten. Die Kabeldurchführung ist folglich selbsthemmend innerhalb der Aufnahmeöffnung.

Die Aufnahmeöffnung 10 kann auf einfache Art und Weise bereitgestellt werden, z.B. bei der Herstellung des Gehäuses vorgegossen werden. Hierbei ist es möglich, auch die Aufnahmeöffnung 10 bereits konisch auszubilden (i.d.R. durch den Herstellungsprozess sogar zwingend erforderlich), wobei sich die Öffnung dann in Richtung einer Außenseite des Gehäuses vergrößert. Ferner kann die Aufnahmeöffnung 10 an der Innenseite mit Nuten oder Rillen versehen sein, die mit den einzelnen Dichtlippen 6 oder der Dichtaufnahme 4 zusammenwirken. Hierdurch wird eine noch bessere Selbsthemmung der Dichtung innerhalb der Aufnahmeöffnung 10 erzielt. Insbesondere können hierbei die Grundfläche 13 der Dichtlippen 6 mit entsprechenden Nuten oder Rillen zusammenwirken.

Eine entsprechende Kabeldurchführung eignet sich insbesondere zur Einführung von Kabeln in ein Lampengehäuse, insbesondere ein Lampengehäuse, welches staub-, feuchtigkeits- und spritzwassergeschützt sein soll.

## Patentansprüche

1. Kabeldurchführung (1) zum Durchführen eines Kabels (2) durch eine Öffnung in einer Wand, insbesondere einer Gehäusewand, umfassend ein Kabel (2) mit einem Kabelmantel (3), eine den Kabelmantel (3) radial umgebende Dichtungsaufnahme (4) und eine in der Dichtungsaufnahme (4) angeordnete Dichtung (5), wobei wenigstens die Dichtungsaufnahme (4) durch An- oder Umspritzen auf dem Kabelmantel (3) ausgebildet ist, die Dichtungsaufnahme (4) an der Außenseite in axialer Richtung des Kabels (2) konisch verjüngt ausgebildet ist, **dadurch gekennzeichnet, dass**
die Dichtungsaufnahme (4) mit einer radialen Vertiefung zur Aufnahme der Dichtung (5) ausgebildet ist.

2. Kabeldurchführung (1) nach Anspruch 1, **dadurch gekennzeichnet, dass** die Dichtungsaufnahme (4) und die Dichtung (5) durch An- oder Umspritzen auf dem Kabelmantel (3) ausgebildet sind.

3. Kabeldurchführung (1) nach Anspruch 1 oder 2, **dadurch gekennzeichnet, dass** die Dichtungsaufnahme (4) und die Dichtung (5) aus Kunstoffen unterschiedlicher Härte und/oder Elastizität bestehen.

4. Kabeldurchführung (1) nach Anspruch 3, **dadurch gekennzeichnet, dass** die Dichtungsaufnahme (4) härter als die Dichtung (5) ist.

5. Kabeldurchführung (1) nach einem der Ansprüche 1 bis 4, **dadurch gekennzeichnet, dass** die radiale Vertiefung im Querschnitt U-förmig ausgebildet ist.

6. Kabeldurchführung (1) nach einem der Ansprüche 1 bis 5, **dadurch gekennzeichnet, dass** die Dichtung (5) an der Außenseite mindestens eine radial umlaufende Dichtlippe (6) aufweist.

7. Kabeldurchführung (1) nach Anspruch 6, **dadurch gekennzeichnet, dass** die Dichtung (5) an der Außenseite drei umlaufende Dichtlippen (6) aufweist.

8. Kabeldurchführung (1) nach Anspruch 6 oder 7, **dadurch gekennzeichnet, dass** sich die mindestens eine Dichtlippe (6) ein vorbestimmtes Maß über die Außenseite (12) der Dichtungsaufnahme (4) hinaus erstreckt.

9. Kabeldurchführung (1) nach einem der Ansprüche 6 bis 8, **dadurch gekennzeichnet, dass** sich die Dichtlippen (6) nach außen verjüngen.

10. Kabeldurchführung (1) nach einem der Ansprüche 6 bis 9, **dadurch gekennzeichnet, dass** die Dichtung (5) eine Lamellendichtung ist.

11. Kabeldurchführung (1) nach einem der Ansprüche 1 bis 10, **dadurch gekennzeichnet, dass** die Dichtungsaufnahme (4) an einem Ende des Kabelmantels (3) angeordnet ist und eine Stirnfläche des Kabelmantels (1) umgreift.

12. Kabeldurchführung (1) nach einem der Ansprüche 1 bis 11, **dadurch gekennzeichnet, dass** die Kabeldurchführung (1) in der Öffnung selbsthemmend hält.

## Claims

1. Bushing (1) for feeding a cable (2) through an opening in a wall, in particular a housing wall, comprising a cable (2) with a cable sheath (3), a seal receptacle (4) radially surrounding the cable sheath (3) and a seal (5) arranged in the seal receptacle (4), wherein at least the seal receptacle (4) is formed by injection moulding or overmoulding on the cable sheath (3), the seal receptacle (4) on the outer side is formed tapering conically in the axial direction of the cable (2), **characterised in that** the seal receptacle (4) is formed with a radial depression for receiving the seal (5).

2. Bushing (1) according to claim 1, **characterised in that** the seal receptacle (4) and the seal (5) are formed by injection moulding or overmoulding on the cable sheath (3).

3. Bushing (1) according to claim 1 or 2, **characterised in that** the seal receptacle (4) and the seal (5) consist of plastics of different hardness and/or elasticity.

4. Bushing (1) according to claim 3, **characterised in that** the seal receptacle (4) is harder than the seal (5).

5. Bushing (1) according to any one of claims 1 to 4, **characterised in that** the radial depression is formed in a U-shape in the cross-section.

6. Bushing (1) according to any one of claims 1 to 5, **characterised in that** the seal (5) has on the outer side at least one radially circumferential seal lip (6).

7. Bushing (1) according to claim 6, **characterised in that** the seal (5) has on the outer side three circumferential seal lips (6).

8. Bushing (1) according to claim 6 or 7, **characterised in that** the at least one seal lip (6) extends a predetermined amount beyond the outer side (12) of the seal receptacle (4).

9. Bushing (1) according to any one of claims 6 to 8, **characterised in that** the seal lips (6) taper outwards.

10. Bushing (1) according to any one of claims 6 to 9, **characterised in that** the seal (5) is a laminar seal.

11. Bushing (1) according to any one of claims 1 to 10, **characterised in that** the seal receptacle (4) is arranged at one end of the cable sheath (3) and encloses an end face of the cable sheath (1).

12. Bushing (1) according to any one of claims 1 to 11, **characterised in that** the bushing (1) is held in the opening in a self-locking manner.

## Revendications

1. Passe-câble (1) pour le passage d'un câble (2) par une ouverture dans une paroi, en particulier dans une paroi de boîtier, comprenant un câble (2) avec une gaine de câble (3), un siège d'étanchéité (4) entourant radialement la gaine de câble (3) et une étanchéité (5) agencée dans un siège d'étanchéité (4), dans lequel au moins le siège d'étanchéité (4) est constitué par contre-moulage ou surmoulage de la gaine de câble (3), le siège d'étanchéité (4) étant conique sur le côté externe en direction axiale du câble (2),
**caractérisé en ce que** le siège d'étanchéité (4) est conformé avec un renforcement radial pour recevoir l'étanchéité (5).

2. Passe-câble (1) selon la revendication 1, **caractérisé en ce que** le siège d'étanchéité (4) et l'étanchéité (5) sont constitués par contre-moulage ou surmoulage de la gaine de câble (3).

3. Passe-câble (1) selon la revendication 1 ou 2, **caractérisé en ce que** le siège d'étanchéité (4) et l'étanchéité (5) sont constitués de matériaux plastiques de différente dureté et/ou élasticité.

4. Passe-câble (1) selon la revendication 3, **caractérisé en ce que** la dureté du siège d'étanchéité (4) est supérieure à celle de l'étanchéité (5).

5. Passe-câble (1) selon l'une des revendications 1 à 4, **caractérisé en ce que** le renforcement radial présente une section transversale en forme de U.

6. Passe-câble (1) selon l'une des revendications 1 à 5, **caractérisé en ce que** l'étanchéité (5) présente au moins une lèvre d'étanchéité circonférentielle radiale (6) sur son côté externe.

7. Passe-câble (1) selon la revendication 6, **caractérisé en ce que** l'étanchéité (5) présente trois lèvres d'étanchéité circonférentielles (6) sur son côté externe.

8. Passe-câble (1) selon la revendication 6 ou 7, **caractérisé en ce que** ladite au moins une lèvre d'étanchéité (6) dépasse vers l'extérieur du côté externe (12) du siège d'étanchéité (4) d'au moins une valeur prédéterminée.

9. Passe-câble (1) selon l'une des revendications 6 à 8, **caractérisé en ce que** les lèvres d'étanchéité (6) sont coniques en se réduisant vers l'extérieur.

10. Passe-câble (1) selon l'une des revendications 6 à 9, **caractérisé en ce que** l'étanchéité (5) est une étanchéité à lamelles.

11. Passe-câble (1) selon l'une des revendications 1 à 10, **caractérisé en ce que** le siège d'étanchéité (4) est agencé à une extrémité de la gaine de câble (3) et entoure une face frontale de la gaine de câble (1).

12. Passe-câble (1) selon l'une des revendications 1 à 11, **caractérisé en ce que** le passe-câble (1) est maintenu de manière autobloquante dans l'ouverture.
